# EUROPEAN PATENT SPECIFICATION

(11) **EP 1 663 446 B1**
(45) Date of publication and mention of the grant of the patent: **23.06.2010**
(21) Application number: 04817759.6
(22) Date of filing: 07.09.2004
(51) Int. Cl.: B01D 45/00, B01D 45/08

(54) **GAS-LIQUID IMPINGEMENT SEPARATOR INCORPORATED IN A PIPING ELBOW**
IN EINEM ROHRKNIE EINGEBAUTER GAS-FLÜSSIGKEITS-PRALLABSCHEIDER
SEPARATEUR A CHOC DE GAZ-LIQUIDE INCORPORE DANS UN COUDE DE TUYAU

(30) Priority: 17.09.2003 US 664528
(43) Date of publication of application: 07.06.2006
(73) Proprietor: EASTMAN CHEMICAL COMPANY, Kingsport TN 37660 (US)
(72) Inventor: SCHERRER, Paul, Keith, Johnson City, TN 37604 (US)
(74) Representative: Wibbelmann, Jobst
(86) International application number: PCT/US2004/028822
(87) International publication number: WO 2005/051507

(56) References cited:
- EP-A- 0 233 332
- WO-A-88/04010
- CH-A5- 621 490
- GB-A- 409 988
- SU-A1- 874 123
- US-A- 851 494
- US-A- 5 882 386

## Description

### BACKGROUND OF THE INVENTION

### 1. Field of the Invention

The present invention is directed to separation of liquid droplets from gas-liquid streams in chemical processes.

### 2. Background Art

Many chemical processes require take-off of a gas phase from chemical processing equipment such as chemical reactors. In some cases, the nature of the various reactants, products, and byproducts facilitate removal of a gas phase substantially free of liquid. However, in other processes, considerable quantities of liquid droplets may be associated with the gas phase, and in the case where the liquid droplets can later solidify, whether due strictly to a phase change or to subsequent reaction, lines and valves may be plugged and require disassembly and cleaning or replacement. Furthermore, in many cases, the liquid droplets may constitute a loss of valuable reactants, intermediate products, or end products. For example, during preparation of polyethylene terephthalate polymers, polymer and oligomer particles may carry over with ethylene glycol and water as the latter are removed from the reactor in a vapor phase.

Many types of devices for liquid removal from gas streams are known, including cyclone separators, chill plates, filters, and the like. Packed columns efficiently remove liquid droplets, for example. However, many of these methods, for instance chill plates, are energy intensive, and others such as packed columns exhibit a severe pressure drop as well as being prone to plugging. In-line filters also suffer from these drawbacks.

Inertial separators or traps make use of the fact that a flowing gas can easily make turns that droplets with large inertia cannot. The droplets that cannot turn with the gas stream because of their inertia strike or impact a target or collecting surface, onto which they are deposited. A simple pipe elbow is an example of such a separator. However, such separators are generally efficient only for droplets of materials with large inertia. Since the inertia of the droplets is measured by its mass, the size and density of the droplets is important in determining the removal efficiency.

In U.S. Patent 5,181,943, liquid removal is effectuated by providing a large number of plate-type baffles across the path of a liquid-gas stream, the baffles being substantially parallel but downward sloping, and alternately extending from opposite sides of the separation device, positioned transverse to the initial direction of flow. This device creates a high surface area serpentine path, and must be quite large if pressure drop is to be low. Since in many cases the separator must be maintained at a specific operating temperature and thus requires considerable external insulation, such devices are relatively capital intensive.

U.S. Patent 5,510,017 discloses a gas-liquid separator involving two sets of concentric, radially arranged vanes, which cause a swirling flow of liquid-containing gas directed therethrough. The centrifugal forces generated cause liquid droplets to impinge upon the walls of the pipe section containing the separator, from which they are removed as bulk liquid by a series of drains. This device is of rather complex construction, and is believed to be useable only when configured for horizontal flow due to the placement of liquid-trapping baffles and drains. Moreover, conversion of linear flow to a swirling flow necessarily requires energy, which is manifested as a pressure drop.

EP 0 197 060 discloses a gas liquid separator useful in gas desulfurizing, which employs a plurality of groups of obliquely mounted large surface area slats which are sprayed with a rinsing liquid to carry away droplets impinging upon the slats. Use of a rinsing liquid is undesirable in many applications.

CH 621 490 A5 discloses a separation device in the form of an elbow. Positioned within said elbow a plurality of vanes are provided which extend in a parallel manner from a central spine.

WO 88/04010 A1 suggests a combustion process in a fluidized reactor including a droplet separator comprising a plurality of vanes and a flow path having a polygonal cross section which turns the gas flow from a vertical to a horizontal direction.

It would be desirable to provide a gas-liquid separator or simple design and construction, which can be used without rinse liquid, which offers low pressure drop, and which is efficient at separating droplets with relatively small inertia.

### SUMMARY OF THE INVENTION

The inventor discovered that the efficiency of an elbow-type inertial separator can be markedly increased by positioning a plurality of vane-like target surfaces within the elbow. Due to the shape of the collecting surfaces and their preferred supporting structure, the addition to the elbow is referred to as a fishbone impingement device. Separation efficiency is high, even for droplets with small inertia. The device is robust, of simple construction, and cost effective.

Accordingly, the subject of the present invention concerns a gas-liquid inertial separator (1), comprising (a) an elbow (3) having an internal wall and a circular cross section; and positioned within said elbow (b) a fishbone separation enhancer, comprising a central spine (4) to which a plurality of longitudinally extending vanes (6) are attached, wherein the vanes (6) are positioned across the direction of gas flow and spaced apart along the direction of gas flow and are oriented downwards in their longitudinal direction with respect to gravity such that liquid collected from liquid-containing gas flowing through said elbow (3) runs downwards to at least one collection site, and said vanes have an aspect ratio (height/thickness) of 2 to 10, the broad side being transverse to the direction of the flow, such that the angle of the vanes with respect to the flow direction is 60° to 90°, and further if one were to look through the elbow along the direction of gas flow, one would see a complete wall of vanes with little or no space there between, or with the vanes actually somewhat overlapping.

### BRIEF DESCRIPTION OF THE DRAWINGS

FIGURE 1 illustrates one embodiment of an inertial gas liquid separator of the present invention, in cutaway view.
FIGURE 2 illustrates a head on view of one embodiment of the fishbone insert of the subject invention inertial gas liquid separator.
FIGURE 3 illustrates an enlarged view of one embodiment of vanes and struts where the vanes slope downward toward the walls of the elbow.
FIGURE 4 illustrates an embodiment where the vanes slope downwardly toward the center and a central collection site rather than toward the walls of the elbow.
FIGURE 5a - 5e illustrate some alternative embodiments of the fishbone insert of the subject invention.
FIGURE 6 illustrates separation efficiency of the subject invention separators as compared to a simple elbow separator, with varying particle size of constant density.
FIGURE 7 illustrates separation efficiency of the subject invention separators as compared to a simple elbow separator, with varying particle size, assuming larger particles to be less dense.
FIGURE 8 schematically represents droplet separation in a separator of the present invention.
FIGURE 9 illustrates a spineless fishbone separator not forming part of the present invention.
FIGURE 10 illustrates a fishbone separator positioned in a square elbow, not forming part of the present invention.
FIGURE 11 illustrates a 45° elbow with fishbone separator from the side.
FIGURE 12 illustrates one preferred mounting method for fishbone separators.
FIGURE 13 illustrates removal efficiency as a function of the number of vanes.

### DETAILED DESCRIPTION OF THE PREFERRED EMBODIMENT(S)

The separators of the present invention include a "fishbone" as hereafter defined, positioned within a pipe elbow. A single fishbone may be employed, or a plurality of fishbone devices may be employed. Preferably, one fishbone is employed per elbow.

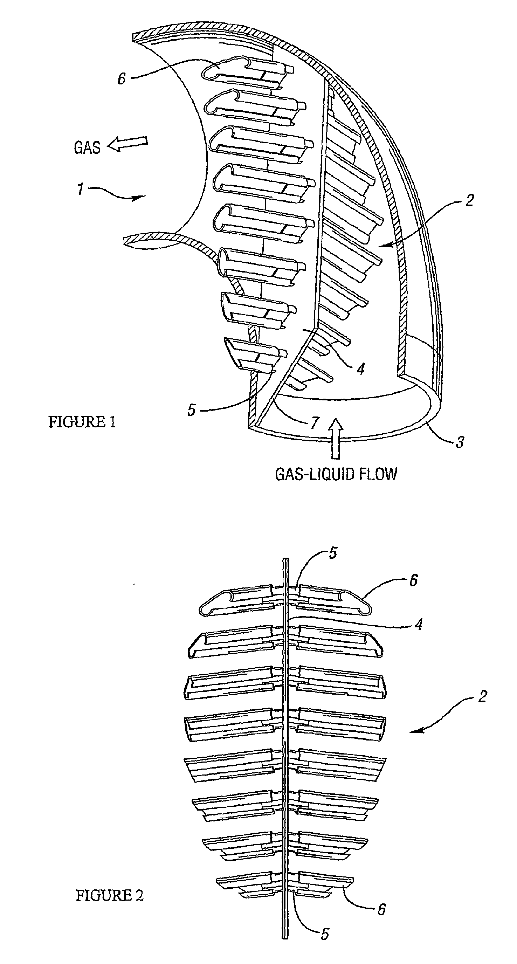

A preferred embodiment of a fishbone may be best described by reference to Figure 1, a cut-away view of an elbow containing a fishbone. The gas-liquid separator 1 comprises pipe elbow 3 and fishbone 2. The fishbone 2 is comprised of spine 4, to which are attached, e.g. by means of bolting, welding, etc., struts 5, which are directed angularly downward in their longitudinal direction with respect to gravity, and preferably angled obliquely cross-sectionally with respect to the direction of gas flow. Mounted on struts 5 are vanes 6, which in this embodiment, are hollow partially flattened tubes, having an opening in one side thereof facing the flow of gas and liquid. In the embodiment shown, the vanes are a sliding fit onto the struts, to provide for length adjustment away from the spine 4. However, the vanes, once positioned appropriately, are generally permanently affixed to the struts, e.g. by spot welding, or the strut may be dispensed with and the vanes affixed directly to the spine. The vanes extend close to the interior walls of the elbow, and may be attached thereto if desired. Preferably, the vanes reach to within 0.1 to 5mm of the elbow interior wall, more preferably 1 - 2mm. Proximity to the elbow walls depends, however, on the elbow diameter, method of drainage, and concerns related to thermal stresses as a result of the thermal expansion of the vanes, and does not otherwise impose any limitation on the structure of the separation device. For example, it is possible to space the ends of the vanes more distantly from the elbow walls, particularly in the case of large elbows with diameters of, for example, 0.75 to 3 meters, or to touch the walls or even be affixed thereto.

In operation, liquid droplets impinge both on the walls of the elbow and upon the spine, struts, and vanes. As the vanes are directed angularly downwards with respect to gravity, accumulated liquid runs down the vane, particularly in a bottom lip which extends the length of the vane and defines the opening therein, when present, and is then also deposited on the elbow walls.

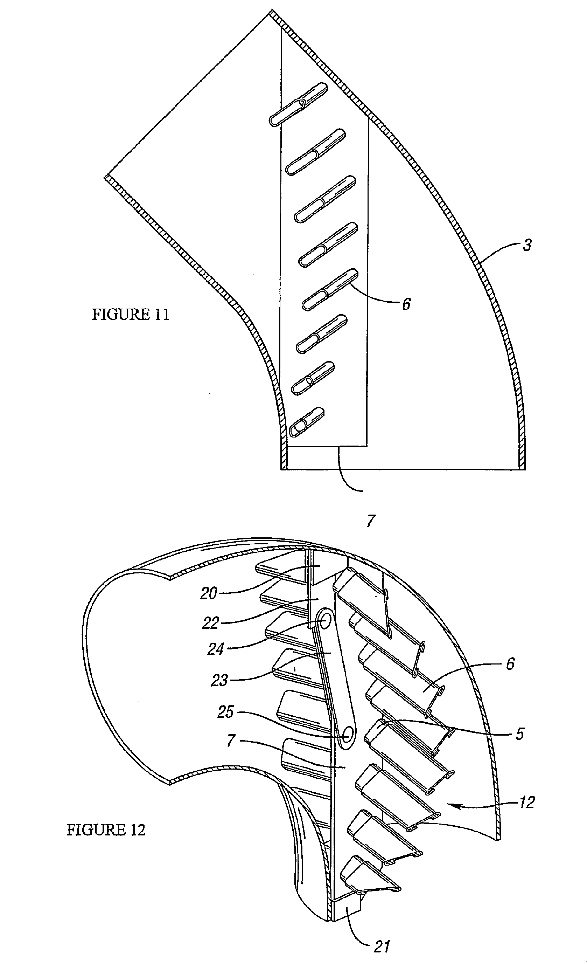

The spine may be positioned in the elbow in any manner, but is preferably substantially vertical. It is preferable, as shown in Figure 11, that the spine have a width which is less than the diameter of the elbow, preferably about 25-70 percent, more preferably 30-50 percent of the elbow diameter, and preferably but not necessarily, be oriented radially inwards from the elbow walls, this radially inwards direction corresponding with a plane through the bend of the elbow, when a normal 45° or 90° elbow is invdved.

However, the spine may also be mounted off center, and/or at an angle to the vertical. Moreover, the spine itself need not be planar, but may be twisted in helical fashion, bent in a curve, etc. In the most preferred designs, the major function of the spines is holding and positioning the vanes, and thus any size or geometric spine arrangement which satisfies this goal will be suitable. The spine may be a simple rod or tube to which the vanes, with or without struts, are attached.

Figure 2 illustrates a preferred embodiment of the fishbone 2, viewed from the side. The downward direction of the struts 5 and vanes 6 may be seen, as may also their oblique orientation with respect to flow. Note that the ends of the vanes are angled and or contoured such that a close approach to the walls of the elbow can be achieved. The actual angles/contours can be readily determined by conventional CAD techniques.

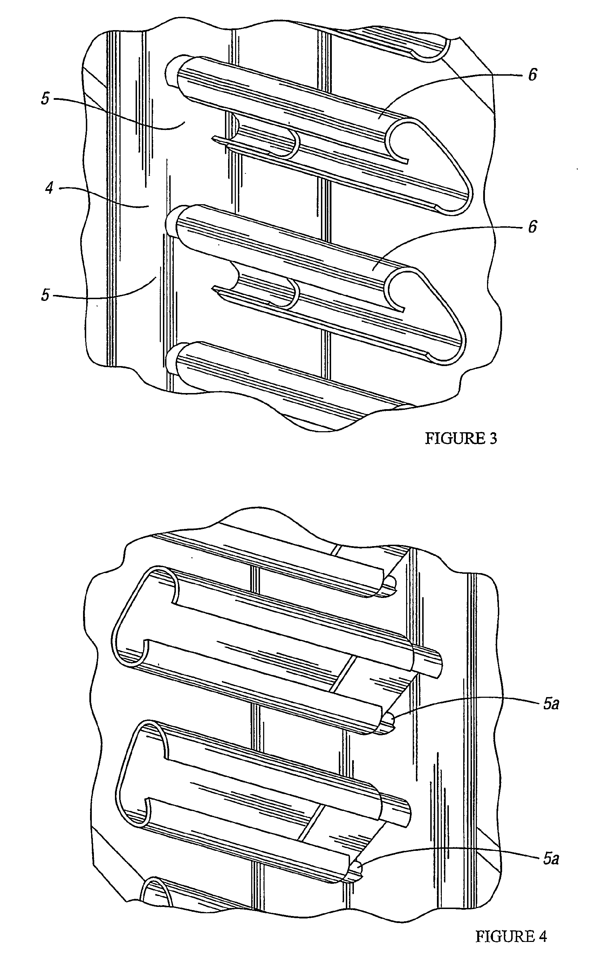

Figure 3 shows an enlarged view of the struts and vanes, showing one preferred embodiment of their mounting.

Figure 4 illustrates an alternative embodiment where the vanes and struts, rather than angling down towards the walls of the elbow, angle downwards towards the spine, which in this case is hollow. At the intersection of the strut with the spine, a hole 5a in the spine allows accumulated fluid to flow into the hollow spine, from which it drains out the bottom. This hole may also advantageously be elongated such that it extends below a substantial portion of the strut and or vane, to catch liquid from other portions of the strut or vane.
The hole may also be configured with an extruding bottom lip to augment capture of liquid. A bottom drain can also be configured to pierce the wall of the elbow, allowing fluid to be directed other than back to the process vessel. The spine may also be extended downwards from the elbow, i.e. into the reactor if the elbow is connected directly to the reactor, to allow fluid to be returned where gas velocity in the reactor is lower, thus having less tendency to be swept back into the elbow by high volume gas flow. These embodiments (central drain) are not presently preferred.

The struts, when used, are generally adapted in shape to accommodate the mounting of the vanes, for example by a sliding fit or by a "spring " fit, but bolts, welding, etc., may also be used. Spot welding, for example, may be used to prevent vibration from dislodging the vanes, although the proximity of the vane ends to the elbow walls will generally prevent the vanes from extending outwards such that they may become detached from the struts. The struts, spine, vanes, and any other parts may be constructed of any desired metal, generally stainless steel, but, where warranted by the nature of the chemicals to which these parts may exposed, may be constructed of titanium, carbon steel, etc. With the proper environment, even plastic construction may be used.

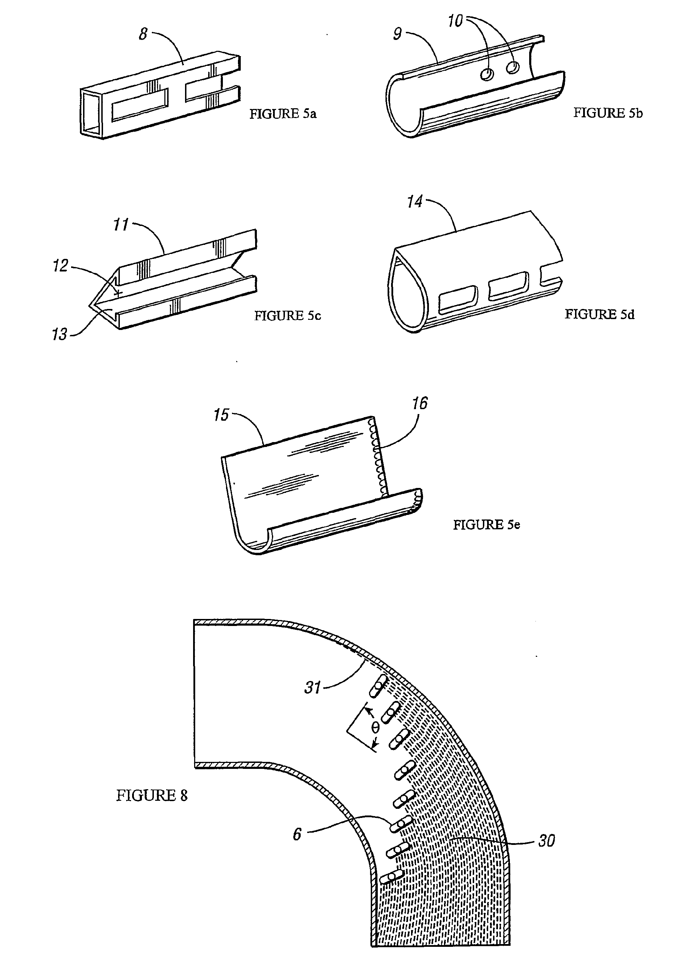

The vanes preferably are constructed "hollow," with a longitudinal slit, e.g. having a "C" or "J" cross-section, and are of a cross-section such that when in position in the fishbone, a bottom channel is preferably present, to aid in conducting liquid along the vane, and to shield collected liquid from the gas flow, so that liquid does not reenter the gas stream. Circular, elliptical, air-foil, square, rectangular, or other shapes may be used. The shape and oblique angle with respect to gas flow may be calculated by aerodynamic simulations to minimize pressure drop, and/or to maximize fluid collection efficiency. Figures 5a - 5e illustrate some possible vane shapes. In Figure 5a, a rectangular vane 8 is shown, with discontinuous openings. In Figure 5b, an open "semi-circular" vane 9 is depicted, with two holes 10 for mounting by bolts to as strut. Figure 5c illustrates a triangular vane with a completely open portion 12 along its length, and a liquid collecting lip 13. Figure 5d shows an airfoil vane 14 with discontinuous opening, while Figure 5e shows a vane 15 having no top lip, which is configured to be welded directly to a spine along weld lines 16.

The oblique angle the vanes make with fluid flow may be constant, or may change from bottom to top of the spine. The angle is such that for vanes having an aspect ratio (height/thickness) of 2 to 10, preferably, 3 to 6, the broad side is transverse to the direction of flow. Thus, preferably, the vanes are located in a plane which is orthogonal to the flow direction at the position of the vane. The angle of the vanes (2 in Figure 8), with respect to the flow direction, is from 60° to 90°. The downward slope is preferably from 5° to 40°, more preferably 5° to 30°. The slope is dependent on the viscosity of the droplets that are captured, the rate at which droplets are captured, and the dimensions of the channel, and can be adjusted accordingly.

If one were to "look" through the elbow along th e direction of gas flow, one would "see" a complete wall of vanes with little or no space therebetween, or with the vanes actually somewhat overlapping. Of course, since the vanes are not actually touching, but are staggered in space, pressure drop is low, while liquid droplets will have a tendency, due to their inertia, to impinge upon the vanes and be collected thereby, as opposed to flowing around the vanes.

The term "across the flow" means that the vanes are oriented lengthwise in a direction other than the flow direction. The vanes are not arranged radially about a single axis across a limited portion of the elbow as disclosed in the straight separators of U.S. Patent 5,510,017, but are positioned sequentially along a considerable length of the elbow, as shown in the figures. Thus, the vanes are not positioned with the objective to impart an intense swirling flow as described in U.S. Patent 5,510,017.

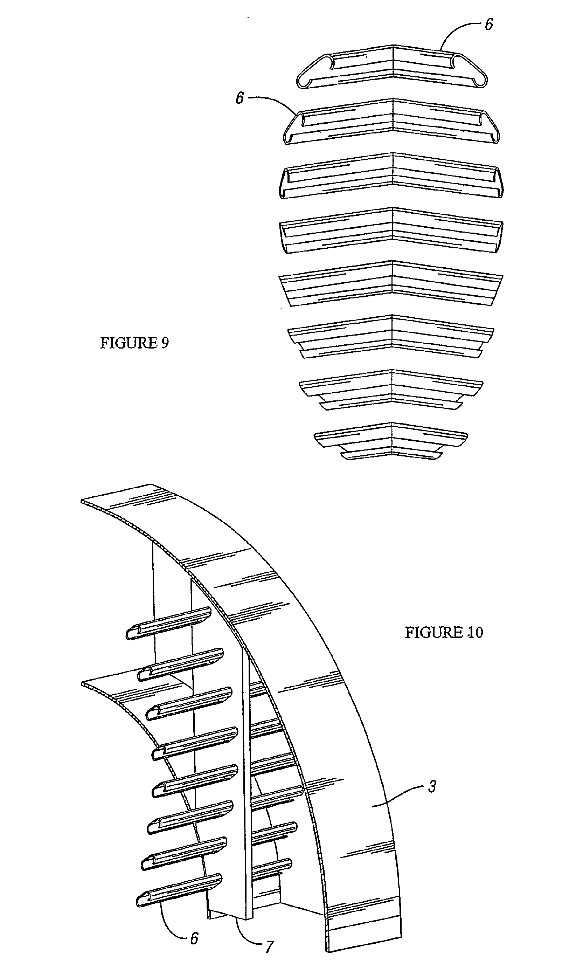

The spine may be a simple plate to which the struts or vanes are attached by suitable methods, or may be a tube or other geometric shape. Since the flat spines shown in the Figures facilitate mounting in the elbow and present significant droplet-collecting surface area themselves, these are presently preferred. While flat spines are also preferred for ease of design and construction, twisted (helical) spines are also possible. The spine, when planar and vertically oriented, is positioned as previously described. The spine aids somewhat in collection efficiency, but primarily serves as a convenient attachment point for the vanes and/or struts, facilitating ease of construction. The embodiment shown in Figure 9 does not form part of the invention. In this case, the vanes will be attached to at least one wall of the elbow, for example by welding, or to struts attached to the wall. The vanes may assume an angled shape, as shown in Figure 9, or may be straight. Straight vanes will be directed downward towards a wall of the elbow, while angular vanes may be directed downwards at both ends, in either case to facilitate collected liquid to run along or within the vanes and be deposited on the elbow walls.

Figure 12 illustrates an alternative mounting method which is preferable in large elbows, where dimensional changes in the elbow and/or fishbone may be expected due to changes in pressure and temperature under operation, or between operation and shut-down. In Figure 12, the fishbone 2 consists of struts 5, vanes 6, and spine 7 as previously disclosed.

In this embodiment, the spine is not attached to the elbow *per se* at either end. Rather, two retainers, an upper retainer 20 and a lower retainer 21 are affixed to the elbow walls. The retainers contain a slot which receives the spine. In the lower retainer 21, the spine may simply be inserted into the slot, or may be secured loosely with a cotter pin, bolt, or the like. Similarly, the upper portion of the spine fits within a slot in the upper retainer 20. The upper retainer has an protrusion 22 extending downwards into the elbow, to which spine mounting link 23 is rotatably attached, again by a cotter pin, bolt, etc. 24 the lower end of the link similarly attached to the spine by cotter pin, bolt, etc. 25. The term "link" include s a unitary link or a link comprised of a multiplicity of elements, so long as the link maintains the general location of the top end of the spine while allowing relative movement between the spine and the walls of the elbow.

The spine is configured to be the same length or somewhat shorter in length than the minimum dimension of the elbow, i.e. at lower temperatures and pressures. As the elbow expands, the link maintains position in the elbow, but the spine does not restrict elbow wall movement. Thus, less stress is placed on all components. The type of mounting described above is termed herein a "floating positioning" mounting, and is characterized by the ability of the separator to maintain its general location in the elbow while allowing relative movement between the separator and the elbow due to differential expansion and the like.

The elbow may be a 90° elbow or one of greater or lesser angle, i.e. 30° to 180°, preferably 45° to 90°. Multiple elbows may be mitered together as required.

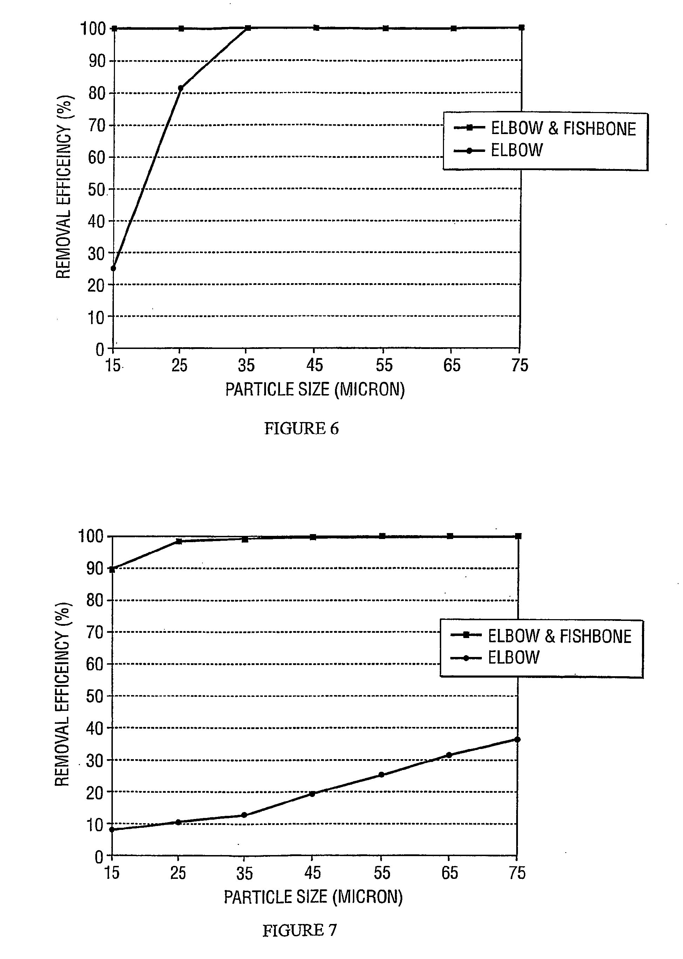

Collection efficiency was examined using conventional computational fluid dynamics. In Figure 6, a comparison of separation efficiency of the fishbone separator of Figure 1 with that of a simple elbow is made, with the assumption that particles of varying size all have the same density. As indicated previously, separation efficiency generally is related to the inertia of the droplets. Small droplets, of course, have correspondingly less inertia. As shown in Figure 6, the simple elbow is efficient for particles above 35 µm, below which the efficiency rapidly falls, such that at a droplet size of 15 µm, only ca. 25 % of droplets are separated. However, the subject invention separator is virtually 100 % efficient even with 15 µm particles for the assumed droplet density.

In Figure 7, the assumption is made that particle density decreases with increasing particle size, a phenomenon which actually occurs in real world processing, perhaps because larger particles are actually bubbles, have other than spherical shape, or contain gaseous voids. In this case, the efficiency of the simple elbow does not reach 40 % , even with 75 µm particles, while the fishbone separator efficiency is virtually 100% down to 25 µm, and still 90% efficient at 15 µm, under the assumptions studied.

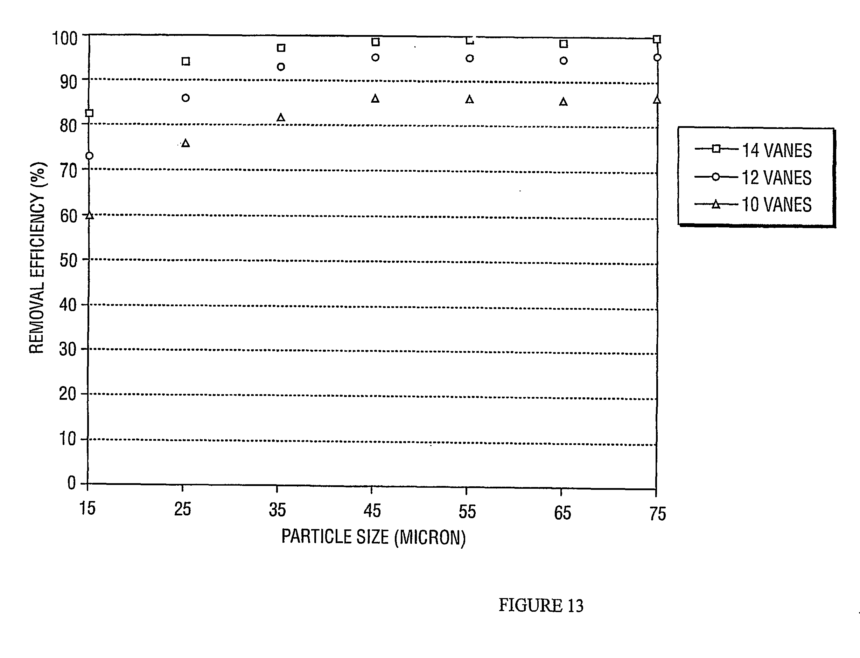

Figure 13 illustrates removal efficiency as it relates to the number of vanes employed, with particle density a function of diameter as described previously. The number of vanes was varied between 10 (5 pairs of 2) to 14, with the vane width being the same as the 16 vane (8 pairs of 2) model used to generate Figures 6 and 7. As can be seen, removal efficiency is high even with 10 vanes, but with 14 vanes can approach 100% efficiency. The optimum number of vanes can be easily calculated based on computational fluid dynamics, and can be verified in the field. Generally speaking, however, 5. to 10 vane pairs will suffice, with 6 to 10 vane pairs being preferred.

Figure 8 illustrates schematically the droplet separation. The shaded area 36 represents gas containing liquid droplets. Only a very small "plume" 31 is not substantially freed of droplets upon passing by vanes 6. However, much of this plume will contact the elbow wall above the vanes, removing significant droplet content from this plume as well.

As can be seen, the subject invention separator is highly efficient, simple to construct, and most of all, exhibits a relatively small pressure drop. Thus overall process efficiency remains high. The additional pressure drop due to the fishbone impingement device is dependent on the density of the gas and the velocity of the gas in the elbow.

The subject invention separator requires at least one elbow, and at least one fishbone mounted therein, the fishbone having a plurality of vanes angled longitudinally downwards with respect to gravity, such that collected fluid may flow thereon and/or therein to one or more collection points. In the preferred embodiments, the collection points are,portions of the elbow internal wall proximate the ends of the vanes of the fishbone. Although shown for a 90-degree elbow, the fishbone could be easily incorporated into elbows of different angles such as 45-degrees.

## Claims

1. A gas-liquid inertial separator (1), comprising
a) an elbow (3) having an internal wall and a circular cross section; and positioned within said elbow
b) a fishbone separation enhancer, comprising a central spine (4) to which a plurality of longitudinally extending vanes (6) are attached, wherein the vanes (6) are positioned across the direction of gas flow and spaced apart along the direction of gas flow and are oriented downwards in their longitudinal direction with respect to gravity such that liquid collected from liquid-containing gas flowing through said elbow (3) runs downwards to at least one collection site, **characterized in that** said vanes have an aspect ratio, i.e. height/thickness of 2 to 10, the broad side being transverse to the direction of the flow, such that the angle of the vanes with respect to the flow direction is 60° to 90°, and further if one were to look through the elbow along the direction of gas flow, one would see a complete wall of vanes with little or no space there between, or with the vanes actually somewhat overlapping.

2. The separator of claim 1, wherein said vanes are of hollow construction and have at least one opening along a length thereof.

3. The separator of claim 2, wherein said opening is along the entire length of the vane, said vane positioned such that the opening faces the direction of flow of gas flowing through said elbow.

4. The separator of claim 1, wherein said vanes are mounted on struts which extend from said spine, or from said elbow.

5. The separator of claim 1, wherein said vanes are hollow and have an opening along a length thereof, said opening facing the direction of gas flow, the opening located such that the hollow vane has a fluid collecting lip located at the bottom thereof.

6. The separator of claim 1, said spine floatingly positioned within said elbow.

7. The separator of claim 1, wherein a bottom end of said spine is located within said elbow by a first retainer fixed to a wall of said elbow, and wherein a top portion of said spine is located within said elbow by a link movably connected to an upper retainer fixed to a wall of said elbow and movably connected to said top portion of said spine.

8. A process for the separation of droplets of liquid from a flowing gas stream, comprising directing said gas stream into a separator of claim 1, collecting liquid by contact of said droplets with said fishbone separation enhancer and walls of said elbow, and providing an exit gas stream which is depleted of liquid droplets.

9. The process of claim 8, wherein an inlet end of said elbow is in fluid communication with a process vessel which emanates a stream of liquid droplet-containing gas into said elbow, and collected liquid is directed back into said vessel from said separator.

10. The process of claim 8, wherein said vessel is a polymerization reactor, and said liquid droplets comprise at least one of liquid monomers or oligomers.

## Patentansprüche

1. Gas-Flüssigkeit Trägheitsabscheider (1), umfassend
a) ein Knie (3), das eine Innenwand und einen Kreisquerschnitt aufweist; und gelagert innerhalb des genannten Knies
b) einen Fischgrätenabscheidungsverstärker, der ein zentrales Rückgrad (4) umfasst, an dem eine Vielzahl von sich longitudinal erstreckenden Flügeln (6) angebracht sind, wobei die Flügel (6) quer zur Gasflussrichtung gelagert und entlang der Gasflussrichtung beabstandet sind und nach unten in ihrer Längsrichtung angesichts der Schwerkraft so orientiert sind, dass Flüssigkeit, gesammelt aus Flüssigkeit beinhaltendem Gas, das durch das genannte Knie (3) fließt, nach unten zu mindestens einer Sammelstelle fließt, **dadurch gekennzeichnet, dass** die genannten Flügel ein Aspektverhältnis, d. h. Höhe/Dicke von 2 bis 10 aufweisen und die breite Seite quer zur Richtung des Flusses liegt, so dass der Winkel der Flügel angesichts der Flussrichtung 60° bis 90° ist und weiterhin das wenn man durch das Knie entlang der Richtung des Gasflusses schauen würde, dass man eine komplette Flügelwand mit wenig oder keinem Abstand dazwischen oder sogar mit etwas überlappenden Flügeln sehen würde.

2. Abscheider nach Anspruch 1, wobei die genannten Flügel hohl ausgebildet sind und mindestens eine Öffnung entlang einer Länge davon aufweisen.

3. Abscheider nach Anspruch 2, wobei die genannte Öffnung entlang der gesamten Länge des Flügels liegt und der genannte Flügel so gelagert ist, dass die Öffnung der Flussrichtung des Gases, das durch das genannte Knie fließt, zugeneigt ist

4. Abscheider nach Anspruch 1, wobei die genannten Flügel auf Streben montiert sind, die sich aus dem genannten Rückgrad oder aus dem genannten Knie erstrecken.

5. Abscheider nach Anspruch 1, wobei die genannten Flügel hohl sind und eine Öffnung entlang einer Länge davon aufweisen und die genannte Öffnung der Richtung des Gasflusses zugeneigt ist und die Öffnung so angeordnet ist, dass der hohle Flügel einen Fluid-Auffangrand aufweist, der auf dem Boden davon angeordnet ist.

6. Abscheider nach Anspruch 1, wobei das genannte Rückgrad schwebend innerhalb des genannten Knies gelagert ist.

7. Abscheider nach Anspruch 1, wobei ein unteres Ende des genannten Rückgrads innerhalb des genannten Knies durch eine erste Halterung angeordnet ist, die an eine Wand des genannten Knies fixiert ist und wobei ein oberer Abschnitt des genannten Rückgrads innerhalb des genannten Knies durch ein Bindeglied angeordnet ist, das beweglich verbunden mit einer oberen Halterung, die an einer Wand des genannten Knies fixiert ist, und beweglich verbunden mit dem genannten oberen Abschnitt des genannten Rückgrads ist.

8. Verfahren zur Abscheidung von Flüssigkeitstropfen aus einem fließendem Gasstrom, umfassend Leiten des genannten Gasstroms in einen Abscheider nach Anspruch 1, Sammeln von Flüssigkeit durch Kontaktieren der genannten Tropfen mit dem genannten Fischgrätenabscheidungsverstärker und den Wänden des genannten Knies und zur Verfügung stellen eines Auslassgasstroms, der an flüssigen Tropfen verarmt ist.

9. Verfahren nach Anspruch 8, wobei ein Einlassende des genannten Knies in Fluid-Verbindung mit einem Verfahrensgefäß steht, das einen Strom aus Gas, der flüssige Tropfen beinhaltet, in das genannte Knie ausströmt und gesammelte Flüssigkeit aus dem genannten Abscheider zurück in das genannte Gefäß geleitet wird.

10. Verfahren nach Anspruch 8, wobei das genannte Gefäß ein Polymerisationsreaktor ist und die genannten flüssigen Tropfen mindestens eines aus flüssigem Monomeren oder Oligomeren umfasst.

## Revendications

1. Séparateur inertiel gaz-liquide (1), comprenant
a) un coude (3) ayant une paroi interne et une coupe transversale circulaire ; et positionné à l'intérieur dudit coude
b) un améliorateur de séparation en arête de poisson, comprenant une arête centrale (4) à laquelle une pluralité de déflecteurs (6) s'étendant longitudinalement sont fixés, dans lequel les déflecteurs (6) sont positionnés au travers du sens d'écoulement du gaz et espacés le long du sens d'écoulement du gaz et sont orientés vers le bas dans leur sens longitudinal par rapport à la gravité, de telle sorte qu'un liquide collecté à partir d'un gaz contenant un liquide s'écoulant à travers ledit coude (3) s'écoule vers le bas jusqu'à au moins un site de collecte, **caractérisé en ce que** lesdits déflecteurs ont un rapport de format, à savoir hauteur/épaisseur, de 2 à 10, le côté large étant transversal au sens de l'écoulement, de telle sorte que l'angle des déflecteurs par rapport au sens d'écoulement est 60° à 90°, et de plus si l'on devait regarder à travers le coude le long du sens d'écoulement du gaz, on verrait une paroi complète de déflecteurs avec peu ou pas d'espace entre ceux-ci, ou avec les déflecteurs se chevauchant en fait quelque peu.

2. Séparateur selon la revendication 1, dans lequel lesdits déflecteurs sont de construction creuse et ont au moins une ouverture le long d'une longueur de ceux-ci.

3. Séparateur selon la revendication 2, dans lequel ladite ouverture est le long de la totalité de la longueur du déflecteur, ledit déflecteur positionné de telle façon que l'ouverture fait face au sens d'écoulement du gaz s'écoulant à travers ledit coude.

4. Séparateur selon la revendication 1, dans lequel lesdits déflecteurs sont montés sur des supports qui s'étendent à partir de ladite arête centrale, ou à partir dudit coude.

5. Séparateur selon la revendication 1, dans lequel lesdits déflecteurs sont creux et ont une ouverture le long d'une longueur de ceux-ci, ladite ouverture faisant face au sens d'écoulement du gaz, l'ouverture située de telle façon que le déflecteur creux a une lèvre de collecte de fluide située au fond de celui-ci.

6. Séparateur selon la revendication 1, ladite arête centrale positionnée de façon flottante à l'intérieur dudit coude.

7. Séparateur selon la revendication 1, dans lequel une extrémité de fond de ladite arête centrale est située à l'intérieur dudit coude par un premier élément de maintien fixé à une paroi dudit coude, et dans lequel une partie supérieure de ladite arête centrale est située à l'intérieur dudit coude par une liaison connectée de façon mobile à un élément de maintien supérieur fixé à une paroi dudit coude et connecté de façon mobile à ladite partie supérieure de ladite arête centrale.

8. Procédé pour la séparation de gouttelettes de liquide d'un flux de gaz en écoulement, comprenant de diriger ledit flux de gaz à l'intérieur d'un séparateur selon la revendication 1, de collecter le liquide par contact desdites gouttelettes avec ledit améliorateur de séparation en arête de poisson et les parois dudit coude, et de créer un flux de gaz de sortie qui est appauvri en gouttelettes de liquide:

9. Procédé selon la revendication 8, dans lequel une extrémité d'entrée dudit coude est en communication de fluide avec une cuve de traitement qui émane un flux de gaz contenant des gouttelettes de liquide à l'intérieur dudit coude, et le liquide collecté est redirigé à l'intérieur de ladite cuve à partir dudit séparateur.

10. Procédé selon la revendication 8, dans lequel ladite cuve est un réacteur de polymérisation, et lesdites gouttelettes de liquide comprennent au moins l'un de monomères ou d'oligomères liquides.
